Europäisches Patentamt

European Patent Office

Office européen des brevets

(11) Veröffentlichungsnummer: **0 059 945**
B1

# EUROPÄISCHE PATENTSCHRIFT

(45) Veröffentlichungstag der Patentschrift:
12.10.83

(21) Anmeldenummer: 82101699.5

(22) Anmeldetag: 04.03.82

(51) Int. Cl.³: **G 06 K 13/02, G 06 K 7/08**

(54) **Belegbearbeitungsvorrichtung.**

(30) Priorität: 06.03.81 DE 3108526

(43) Veröffentlichungstag der Anmeldung:
15.09.82 Patentblatt 82/37

(45) Bekanntmachung des Hinweises auf die Patenterteilung:
12.10.83 Patentblatt 83/41

(84) Benannte Vertragsstaaten:
AT CH DE FR GB IT LI NL SE

(56) Entgegenhaltungen:
DE-A-2 952 442
DE-B-2 507 767
US-A-3 866 827
US-A-3 976 858
US-A-4 040 097

(73) Patentinhaber: Nixdorf Computer Aktiengesellschaft,
Fürstenallee 7, D-4790 Paderborn (DE)

(72) Erfinder: Haftmann, Johannes, Eggestrasse 44,
D-4791 Dörenhagen (DE)

(74) Vertreter: Patentanwälte Schaumburg Schulz-Dörlam &
Thoenes, Mauerkircherstrasse 31 Postfach 80 15 60,
D-8000 München 80 (DE)

ACTORUM AG

Belegbearbeitungsvorrichtung

Die Erfindung bezieht sich auf eine Belegbearbeitungsvorrichtung mit einer Platte, deren eine Seite als Anlagefläche für Belege dient, und mit einem zum Lesen von Aufzeichnungen und/oder zum Aufzeichnen ausgebildeten Kopf, der nahe der der Anlagefläche abgewandten Rückseite der Platte verstellbar angebracht ist, sodass er in einer Arbeitsstellung mit einem auf der Anlagefläche befindlichen Beleg durch einen in der Platte ausgenommenen Schlitz hindurch zusammenarbeitet.

Bei einer derartigen Bearbeitungsvorrichtung werden Belege wie beispielsweise Rechnungen, Quittungen, Schecks bearbeitet, indem sie beispielsweise längs eines Anschlages über den in der Platte gebildeten Schlitz hinweggeschoben werden, wobei magnetische und/oder optische, meist codierte Aufzeichnungen mittels des Kopfes gelesen werden oder solche Aufzeichnungen mittels des Kopfes auf den Beleg aufgebracht werden oder auch nacheinander oder gleichzeitig sowohl ein Lesen wie auch ein Aufzeichnen erfolgt. Der Schlitz, durch den hindurch der Kopf mit einem Beleg zusammenarbeitet, erstreckt sich im allgemeinen quer zur Transportrichtung des Beleges und kann eine Breite von mehr als 10 mm und auch von einem Mehrfachen dieses Wertes haben, beispielsweise um den Kopf genau auf die Lage der zu lesenden Spur einzujustieren oder um mehrere parallele Aufzeichnungsspuren zu lesen oder aufzuzeichnen.

Wenn in eine derartige Belegbearbeitungsvorrichtung ein Beleg eingeführt wird und mit seiner in der Förderrichtung des Beleges vorderen Kante über den Schlitz hinwegbewegt wird, so kann eine verbogene oder beschädigte Ecke oder Kante in den Schlitz hineingeschoben werden, wodurch die Funktion der Bearbeitungsvorrichtung behindert wird. Auch können Büro- und Heftklammern, die sich an einem Beleg befinden, im Schlitz gefangen werden und den Weitertransport des Beleges verhindern und den Kopf beschädigen. Schliesslich können auch solche Klammern oder sonstige mit einem Beleg verbundenen Teile sowie Schmutz und Staub in den Schlitz hineinfallen und Störungen verursachen.

Der Erfindung liegt die Aufgabe zugrunde, zur Vermeidung der vorgenannten Störungen eine Verschliessvorrichtung vorzusehen, die es gestattet, den Schlitz zu verschliessen, solange keine Bearbeitung eines Beleges mittels des Kopfes erfolgt.

Die Aufgabe wird gemäss der Erfindung bei einer Belegbearbeitungsvorrichtung der eingangs genannten Art dadurch gelöst, dass der Kopf in eine von dem Schlitz beabstandete, hinter der Rückseite der Platte liegende Ruhestellung verstellbar ist, dass benachbart der Rückseite der Platte ein Aufnahmeteil in Abhängigkeit von den Verstellbewegungen des Kopfes zwischen einer dem Schlitz benachbarten ersten Stellung und einer vom Schlitz entfernten zweiten Stellung parallel zu der Platte verschiebbar ist, dass das Aufnahmeteil ein Schliessteil trägt, das gegenüber dem Aufnahmeteil in Richtung senkrecht zur Anlagefläche zwischen einer Schliessstellung, in der es innerhalb des Schlitzes liegt und diesen zumindest teilweise verschliesst, und einer hinter der Platte liegenden Öffnungsstellung verstellbar ist und dass Mittel vorgesehen sind, die bei Erreichen der dem Schlitz benachbarten ersten Stellung des Aufnahmeteils die Verstellung des Schliessteils in die Schliessstellung und bei einer Verschiebung des Aufnahmeteils aus dessen erster Stellung heraus die Verstellung des Schliessteils in die Öffnungsstellung bewirken.

Bei der Belegbearbeitungsvorrichtung gemäss der Erfindung bilden der Aufnahmeteil und der von ihm getragene Schliessteil eine Verschliessvorrichtung, die es gestattet, den Schlitz immer dann zu verschliessen, wenn sich der Kopf nicht in seiner Arbeitsstellung befindet. Dieses Verschliessen erfolgt selbsttätig in Abhängigkeit davon, dass der Kopf in eine Ruhestellung verstellt wird. Bei Ruhestellung des Kopfes kann daher ein Beleg in die Bearbeitungsvorrichtung eingeführt werden, ohne dass eine Ecke oder die Vorderkante des Belegs in den Schlitz hineingeschoben, mit dem Beleg verbundene Klammern im Schlitz angehalten werden oder lose mit dem Beleg verbundene Teile in den Schlitz hineinfallen könnten. Da bei einer Rückstellung des Kopfes aus der Ruhestellung in die Arbeitsstellung das Aufnahmeteil selbsttätig wieder in seine von dem Schlitz entfernte zweite Stellung verschoben wird und bei Beginn dieser Verschiebungsbewegung das Schliessteil aus seiner Schliessstellung in die Öffnungsstellung verstellt wird, behindern diese Teile die Bearbeitung eines Belegs mittels des Kopfes nicht. Da die Verstellung des Schliessteiles zwischen der Verschliessstellung und der Öffnungsstellung in Richtung senkrecht zur Anlagefläche nur dann erfolgt, wenn sich das Aufnahmeteil in oder nahe seiner dem Schlitz benachbarten ersten Stellung befindet, kann bei der Verschiebung des Aufnahmeteils zwischen dessen erster und dessen vom Schlitz entfernten zweiter Stellung das in Öffnungsstellung befindliche Schliessteil hinter der Platte vom Aufnahmeteil mitgenommen werden, ohne dass eines dieser Teile an der Rückseite der Platte reibt, was im Hinblick auf einen leichten Antrieb der Verschlussvorrichtung ebenso wie im Hinblick auf die Vermeidung von die Funktion des Kopfes beeinträchtigenden, durch Abrieb entstehenden Partikeln (Staub) günstig ist.

Ausgestaltungen der Erfindung sind in den Unteransprüchen angegeben.

Die Erfindung wird im folgenden anhand der Zeichnungen näher erläutert, in denen ein Ausführungsbeispiel dargestellt ist. Es zeigen:

Fig. 1 einen Schnitt durch eine Belegbearbeitungsvorrichtung entlang von deren Schlitz mit in der Schliessstellung befindlichem Schliessteil und mit in der ersten Stellung befindlichem Aufnahmeteil;

Fig. 2 den Schnitt gemäss Fig. 1, jedoch mit gegenüber der ersten Stellung geringfügig verschobenem Aufnahmeteil und mit in der Öffnungsstellung befindlichem Schliessteil;

Fig. 3 einen Schnitt entsprechend Fig. 1, jedoch mit in der zweiten Stellung befindlichem Aufnahmeteil, in der Öffnungsstellung befindlichem Schliessteil und in der Arbeitsstellung befindlichem Kopf;

Fig. 4 einen Querschnitt entsprechend der Linie IV-IV in Fig. 1;

Fig. 5 eine Unteransicht des Schliessteiles der Belegbearbeitungsvorrichtung gemäss Fig. 1;

Fig. 6 eine Seitenansicht des Schliessteiles und

Fig. 7 eine Draufsicht auf das Aufnahmeteil der Belegbearbeitungsvorrichtung gemäss Fig. 1.

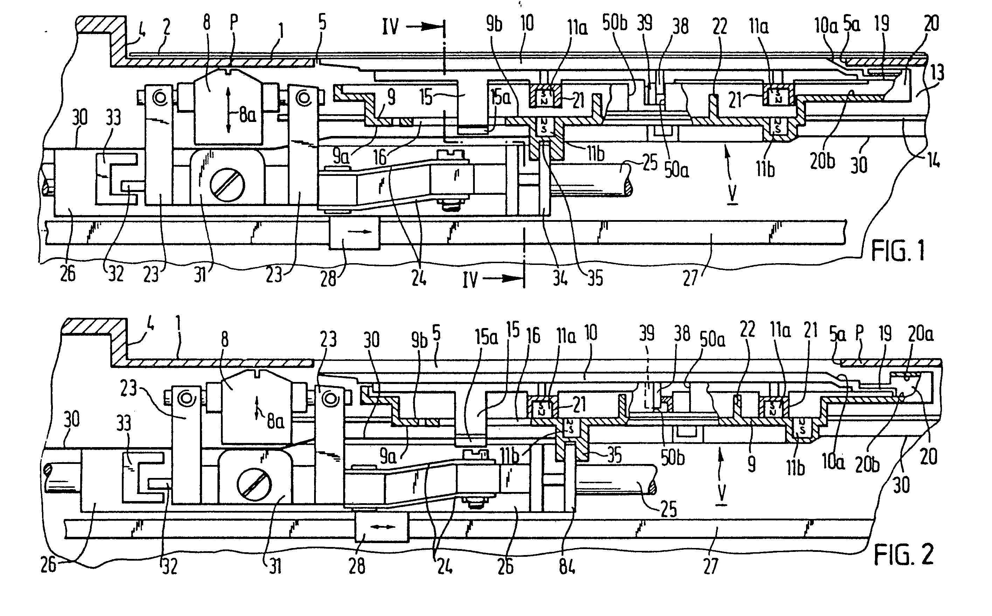

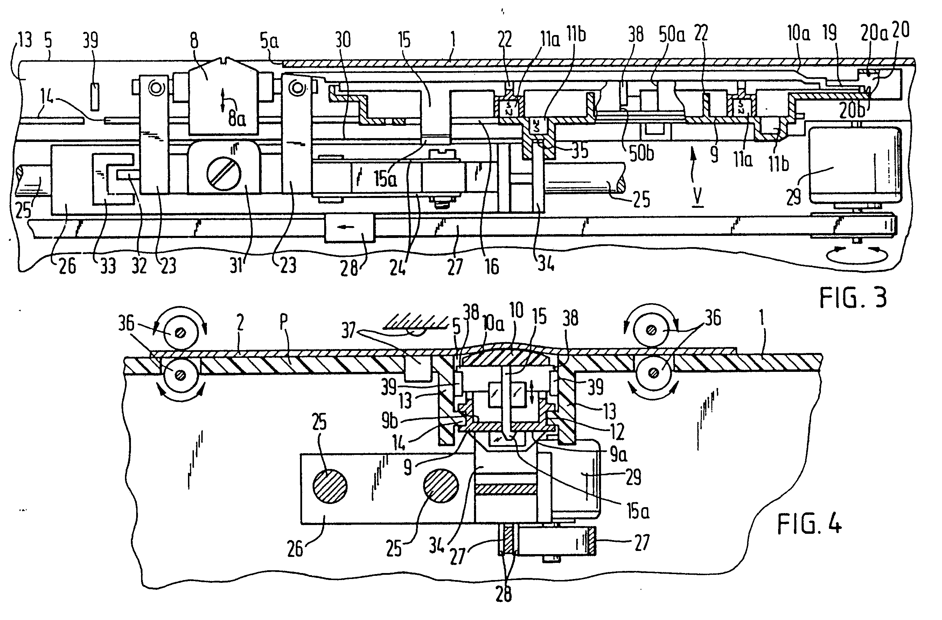

Die in Fig. 1 bis Fig. 4 dargestellte Belegbearbeitungsvorrichtung umfasst in üblicher Weise eine waagerechte, ebene Platte P, deren Oberseite als Anlagefläche 1 für einen darauf liegenden Beleg 2 (Fig. 1, 4) dient. Nahe der Anlagefläche 1 abgewandten Rückseite oder Unterseite der Platte P ist ein zum Lesen von auf dem Beleg 2 vorgesehenen Aufzeichnungen und/oder zum Aufzeichnen solcher Aufzeichnungen dienender, beispielsweise als magnetischer Lese- und Aufzeichnungskopf ausgebildeter Kopf 8 verschiebbar angeordnet. In der Platte P ist ein länglicher Schlitz 5 ausgespart. In einer in Fig. 3 sichtbaren Arbeitsstellung liegt der Kopf 8 im wesentlichen hinter dem Schlitz 5 und ragt mit seinem oberen Ende soweit in diesen hinein, dass er einen über den Schlitz 5 hinweggeführten Beleg 2 berührt und diesen bearbeiten kann. Die Platte P wird seitlich des Schlitzes 5 von einer sich senkrecht zu diesem erstreckenden Anschlagkante 4 für den Beleg 2 begrenzt. Bei einer Verschiebung des Belegs entlang der Anschlagkante 4 werden auf der Unterseite des Belegs 2 vorgesehene, nicht näher dargestellte Aufzeichnungsspuren über den Schlitz 5 hinwegbewegt.

Zur Einstellung auf unterschiedliche Aufzeichnungsspuren des Beleges 2 ist der Kopf 8 entlang des Schlitzes 5 in unterschiedliche Arbeitsstellungen verschiebbar, von denen nur eine in Fig. 3 sichtbar ist. Darüber hinaus ist der Kopf 8 in eine von dem Schlitz 5 beabstandete, hinter der Rückseite der Platte P liegende Ruhestellung verstellbar. Grundsätzlich wäre es möglich, den Kopf 8 in Richtung senkrecht zur Anlagefläche 1 von der Platte P fort nach unten in eine Ruhestellung zu bringen oder auch den Kopf 8 zur Erreichung einer Ruhestellung im wesentlichen senkrecht zur Längserstreckung des Schlitzes 5 von diesem fort unter die Platte P zu führen. Angesichts der ohnehin erforderlichen Verschiebung des Kopfes 8 in Längsrichtung des Schlitzes 5 ist beim Ausführungsbeispiel jedoch vorgesehen, dass der Kopf 8 in Längsrichtung des Schlitzes zwischen der Arbeitsstellung und einer in Fig. 1 dargestellten Ruhestellung hin- und hergehend verstellbar ist. Zum Erreichen der Ruhestellung muss der Kopf 8 ausgehend von der Arbeitsstellung nicht nur in Richtung parallel zur Anlagefläche 1, sondern zusätzlich auch noch annähernd um die Dikke der Platte P verstellt werden, während bei der Rückkehr in die Arbeitsstellung eine Verstellung nach oben erforderlich ist, sobald sich der Kopf 8 im Bereich des Schlitzes 5 befindet. Dies ist durch einen Doppelpfeil 8a in Fig. 1 bis 3 angedeutet. Die Verstellung des Kopfes 8 zwischen Arbeits- und Ruhestellung wird weiter unten noch näher erläutert.

Während der Schlitz 5 bei in Arbeitsstellung befindlichem Kopf 8 zu dessen Eintauchen in den Schlitz 5 bei der Bearbeitung des Beleges 2 offen ist, wird der Schlitz 5 bei in Ruhestellung befindlichem Kopf 8 geschlossen. Hierzu ist eine Verschliessvorrichtung V vorgesehen, die ein Aufnahmeteil 9 und ein Schliessteil 10 umfasst.

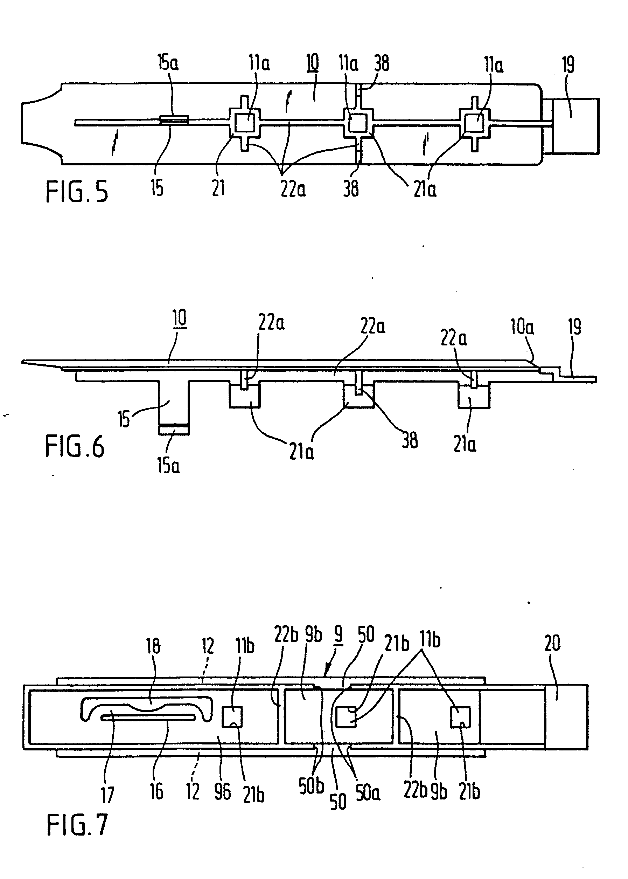

Das benachbart der Rückseite der Platte P verschiebbare Aufnahmeteil 9 wird in Abhängigkeit von den Verstellbewegungen des Kopfes 8 zwischen einer dem Schlitz 5 benachbarten, in Fig. 1 sichtbaren ersten Stellung und einer vom Schlitz 5 entfernten, in Fig. 3 dargestellten zweiten Stellung bewegt. Grundsätzlich wäre es möglich, diese Verstellbewegung quer zur Längserstreckung des Schlitzes 5 vorzunehmen, und die Verstellung zwischen der ersten und der zweiten Stellung könnte auch beispielsweise bei Ausbildung des Aufnahmeteiles als ein Drehteller durch schrittweisen Antrieb um eine zur Anlagefläche 1 senkrechte Hochachse erfolgen. Besonders zweckmässig wird jedoch wie beim Ausführungsbeispiel das Aufnahmeteil in Längsrichtung des Schlitzes 5 verschoben, da hierbei die Verstellung des Kopfes 8 zwischen Arbeitsstellung und Ruhestellung sowie die Verschiebung des Aufnahmeteils 9 zwischen dessen beiden Stellungen gleichzeitig und gleichsinnig mittels der ohnehin zur Verschiebung des Kopfes 8 vorgesehenen Antriebsmittel erfolgen können, ohne dass gesonderte Antriebsmittel für das Aufnahmeteil 9 erforderlich wären. Wie aus Fig. 1 bis 4 und 7 ersichtlich, ist das Aufnahmeteil als langgestreckter, sich parallel zu dem Schlitz 5 erstreckender Kasten von annähernd rechteckigem Grundriss ausgebildet, dessen Längsmittelachse parallel zur Längsachse des Schlitzes 5 verläuft. An seinen beiden Längsseiten aussen weist das Aufnahmeteil 9 je eine durch angeformte Stege gebildete Führungsnut 12 auf. An der Rückseite der Platte P sind beiderseits des Schlitzes 5 nach unten ragende Wandungen 13 (Fig. 4) vorgesehen, an deren einander zugewandten Innenseiten jeweils ein nach innen ragender, waagerechter Führungssteg 14 verläuft, der in eine Führungsnut 12 eingreift. Die Führungsnuten 12 und die Führungsstege 14 bilden somit Führungsmittel, mittels derer das Aufnahmeteil 9 in Längsrichtung des Schlitzes 5 parallel zur Anlagefläche 1 und in einem Abstand von der Rückseite der Platte P verschiebbar geführt ist. Die Führungsstege 14 erstrecken sich nicht nur über die Länge des Schlitzes 5, sondern auch, wie aus Fig. 3 ersichtlich, über das der Ruhestellung des Kopfes 8 (Fig. 1, 2) gegenüberliegende Ende des Schlitzes 5 um annähernd die Länge des Aufnahmeteils 9 hinaus, so dass letzteres an den Führungsstegen 14 auch bis hin zu seiner vom Schlitz 5 entfernten, in Fig. 3 dargestellten zweiten Stellung geführt ist. Das Aufnahmeteil 9 liegt also in seiner ersten Stellung (Fig. 1) hinter dem Schlitz 5 und in seiner zweiten Stellung (Fig. 3) völlig ausserhalb des Bereiches des Schlitzes 5, so dass bei der zweiten Stellung des Aufnahmeteils 9 der Schlitz 5 zum Eintritt des dann in seiner Arbeitsstellung befindlichen Kopfes 8 frei ist. Damit das Aufnahmeteil 9 leicht zusammen mit dem Kopf 8 angetrieben werden kann und insbesondere eine geringe Masseträgheit besitzt, besteht es aus einem leichten Kunststoff, aus dem es einstückig hergestellt ist, und zum selben Zweck hat es die erwähnte Kastenform sowie die Kastenwandungen aussteifende Rippen 22b (Fig. 7), so dass es mit geringen Wandungsstärken gebildet werden kann.

Das Schliessteil 10 ist gegenüber dem Aufnahmeteil 9 in Richtung senkrecht zur Anlagefläche 1 zwischen einer in Fig. 1 und Fig. 4 sichtbaren Schliessstellung, in der es innerhalb des Schlitzes 5 liegt und diesen fast vollständig verschliesst, sowie einer hinter der Platte P liegenden, in Fig. 2 und Fig. 3 eingenommenen Öffnungsstellung verstellbar. Mittels noch zu beschreibender Antriebsmittel erfolgt die Verstellung des Schliessteils 10 in die Schliessstellung nur dann, wenn bei einer Verschiebung des Aufnahmeteils 9 aus dessen dem Schlitz 5 entfernter zweiter Stellung in die dem Schlitz 5 benachbarte erste Stellung letztere vollständig erreicht ist. Die umgekehrte Verstellung des Schliessteils 10 aus der Schliessstellung in die Öffnungsstellung erfolgt, wenn das Aufnahmeteil 9 aus der ersten Stellung wieder in die zweite Stellung verschoben wird, und zwar aus noch zu erläuternden Gründen erst kurz nachdem das Aufnahmeteil 9 seine erste Stellung verlassen hat. Auf dem restlichen Weg zwischen der ersten Stellung und der zweiten Stellung befindet sich das Schliessteil 10 in der Öffnungsstellung, bei der es am Aufnahmeteil 9 anliegt, so dass es zusammen mit diesem vollständig aus dem Bereich des Schlitzes 5 fort verschoben werden kann. Bei dieser Verschiebungsbewegung hat die Oberseite des Schliessteils 10, wie aus Fig. 3 ersichtlich, einen geringfügigen Abstand zur Rückseite der Platte P, so dass bei der Verschiebung des Schliessteils 10 zusammen mit dem Aufnahmeteil 9 keine Reibung zwischen Schliessteil 10 und Platte P auftritt. Da das Schliessteil 10 sowohl zusammen mit dem Aufnahmeteil 9 bei dessen Verschiebungsbewegung wie zusätzlich auch noch bei der Verstellung gegenüber dem Aufnahmeteil 9 in Richtung senkrecht zur Anlagefläche 1 beschleunigt werden muss, ist hier eine geringe Masseträgheit besonders wichtig, weshalb das Schliessteil 10 als einstückiges Kunststoffteil aus einem leichten und hochfesten Kunststoff hergestellt ist, im wesentlichen die Form einer annähernd den Schlitz 5 ausfüllenden Leiste hat und auf der Unterseite dieser Leiste mit in Längs- und Querrichtung verlaufenden Versteifungsrippen 22a (Fig. 5, 6) versehen ist. Auf seiner Oberseite weist das Schliessteil 10 eine konvex gewölbte Beleg-Überlauffläche 10a (Fig. 4) auf, wodurch ein Anhalten eines über den Schlitz 5 hinweggeschobenen Beleges 2 mit besonders grosser Sicherheit selbst dann vermieden wird, wenn sich die Längsränder des Schliessteils 10 nicht vollständig in die Höhe der Anlagefläche 1 erstrecken sollten.

Als Mittel zur Verstellung des Schliessteils 10 gegenüber dem Aufnahmeteil 9 in Abhängigkeit von der Verschiebungsstellung des letzteren können grundsätzlich beliebige Antriebsmittel vorgesehen sein. So könnten beispielsweise im Aufnahmeteil 9 Elektromagnete vorgesehen sein, die unterhalb von ihnen liegende, mit dem Schliessteil 10 verbundene Anker anheben, um das Schliessteil 10 entgegen seinem Gewicht aus der Öffnungsstellung in die Schliessstellung zu bringen. Derartige Antriebsvorrichtungen würden jedoch zu einer relativ hohen Masse des Aufnahmeteils 9 führen, was aus den oben erläuterten Gründen unzweckmässig ist und weiter relativ komplizierte Mittel wie beispielsweise Lichtschranken und Verstärker zur Erfassung der Verschiebungslage und zur dementsprechenden Steuerung der Antriebsmittel des Schliessteiles 10 erfordern. Hingegen ist es günstiger, die körperliche Verschiebung des Aufnahmeteils 9 parallel zur Platte P unmittelbar zur mechanischen Steuerung der Verstellung des Schliessteils 10 in Richtung senkrecht zur Anlagefläche 1 zu verwenden. Dies erfolgt beim Ausführungsbeispiel im wesentlichen dadurch, dass das Schliessteil 10 gegenüber dem hin- und hergehend verschiebbaren Aufnahmeteil 9 parallel zu dessen Verschiebungsrichtung um einen den Verschiebungsweg zwischen der ersten Stellung und der zweiten Stellung des Aufnahmeteils 9 kürzeren Verschiebungsweg zwischen einer ersten Verschiebungslage (Fig. 1) und einer zweiten Verschiebungslage (Fig. 2) verschiebbar ist, dass Mittel zu einer der Verschiebungsrichtung des Aufnahmeteils 9 entgegengesetzten Verschiebung des Schliessteils 10 in die erste Verschiebungslage bei einer Verschiebung des Aufnahmeteils 9 in dessen dem Schlitz 5 benachbarte erste Stellung und Mittel zu einer der Verschiebungsrichtung des Aufnahmeteils 9 entgegengesetzten Verschiebung des Schliessteils 10 in die zweite Verschiebungslage bei einer Verschiebung des Aufnahmeteils 9 aus dessen erster Stellung heraus in Richtung auf dessen zweite Stellung vorgesehen sind und dass als Mittel zur Verstellung des Schliessteils 10 in Richtung senkrecht zur Anlagefläche 1 Antriebsmittel vorgesehen sind, die in mechanisch gesteuerter Abhängigkeit von den Verschiebungslagen des Schliessteils 10 gegenüber dem Aufnahmeteil 9 die Verstellung des Schliessteils 10 bei dessen erster Verschiebungslage in die Schliessstellung und bei dessen zweiter Verschiebungslage in die Öffnungsstellung bewirken. Es wird so eine gegenüber dem Verschiebungsweg des Aufnahmeteils 9 geringe Relativverschiebung zwischen Schliessteil 10 und Aufnahmeteil 9 zur Steuerung der Verstellung des Schliesteils 10 in Richtung senkrecht zur Anlagefläche 1 ausgenutzt.

Der Verschiebungsweg der Relativverschiebung zwischen Schliessteil 10 und Aufnahmeteil 9 parallel zur Verschiebungsrichtung des letzteren ist beim Ausführungsbeispiel dadurch begrenzt, dass eine der auf der Rückseite des Schliessteils 10 vorgesehenen Versteifungsrippen 22a (Fig. 5) sich mit ihren beiden quer zur Längsrichtung des Schliessteils 10 erstreckenden Enden 38 bis hin zu jeweils einem Längsrand des Schliessteils 10 erstreckt und dass die so gebildeten Anschläge 38 jeweils eine in der Längswandung des Aufnahmeteils 9 gebildete Ausnehmung 50 (Fig. 7) durchsetzen, deren in Richtung vom Schlitz 5 fort liegender Rand einen ersten Anschlag 50a und deren zum Schlitz 5 hin liegender Rand einen zweiten, jeweils mit einem Anschlag 38 zusammenwirkenden Anschlag 50b (Fig. 7) bildet. In der ersten Verschiebungslage des Schliessteils 10 gegenüber dem Aufnahmeteil 9 liegen die Anschläge 38 des Schliessteils 10 an den ersten Anschlägen 50a des Aufnahmeteils 9 an, wie in Fig. 1 ersichtlich ist. In der zweiten Verschiebungslage liegen die Anschläge 38 an den zweiten Anschlägen 50b des Aufnahmeteils 9 an, wie in Fig. 2 und 3 dargestellt ist.

Als Mittel zur Verschiebung des Schliessteils 10 gegenüber dem Aufnahmeteil 9 parallel zu dessen Verschiebungsrichtung ist zweckmässig mindestens ein Anschlag vorgesehen, der gegenüber der Platte P ortsfest ist und der mit einem am Schliessteil 10 gebildeten Anschlag zusammenwirkt. Beim Ausführungsbeispiel sind an den Innenseiten der sich von der Platte P rückwärts erstreckenden Wandungen 13 zwei einander gegenüberliegende Anschläge 39 gebildet, und die Anschläge 38 des Schliessteils 10 ragen durch die Ausnehmungen 50 (Fig. 7) des Aufnahmeteils 9 hindurch nach aussen, wie dies in Fig. 4 ersichtlich ist, um bei einer Verschiebung des Schliessteils 10 zusammen mit dem Aufnahmeteil 9 in Richtung auf die dem Schlitz 5 benachbarte erste Stellung des letzteren kurz vor Erreichen dieser ersten Stellung, nämlich bei der in Fig. 2 gezeigten Stellung des Aufnahmeteils 9, aneinander zur Anlage zu kommen, wenn sich das Schliessteil 10 genau hinter dem Schlitz 5 befindet. Während dann von dieser in Fig. 2 gezeigten Stellung ausgehend das Aufnahmeteil 9 noch vollständig in dessen dem Schlitz 5 benachbarte Stellung verschoben wird, wird durch das Aneinanderliegen der Anschläge 38, 39 der Schliessteil 10 bezüglich der Platte P festgehalten, und es erfolgt eine Relativverschiebung des Schliessteils 10 gegenüber dem Aufnahmeteil 9 entgegengesetzt zu der Verschiebungsrichtung des letzteren, bis genau beim Erreichen der dem Schlitz 5 benachbarten ersten Stellung des Aufnahmeteils 9 sich das Schliessteil 10 in seiner ersten Verschiebungslage gegenüber dem Aufnahmeteil 9 befindet (Fig. 1), in Abhängigkeit von deren Erreichen in noch zu beschreibender Weise die Verstellung des Schliessteils 10 aus der Öffnungsstellung in die Schliesssstellung erfolgt.

Die Anschläge 38, 39 haben eine genügend grosse senkrecht zur Anlagefläche 1 gemessene Höhe, um bei dem Schlitz 5 benachbarter erster Stellung des Aufnahmeteils 9 sowohl bei Öffnungsstellung als auch bei Schliessstellung des Schliessteils 10 aneinander anzuliegen. Eine entsprechende Ausbildung von Anschlägen, die eine Relativverschiebung des Schliessteils 10 gegenüber dem Aufnahmeteil 9 bei der Verschiebung des letzteren aus der ersten Stellung in die zweite Stellung bewirken, ist jedoch deshalb nicht möglich, weil diese Relativverschiebung erfolgen muss, unmittelbar nachdem eine Verschiebung des Aufnahmeteils 9 aus dessen erster Stellung in dessen zweite Stellung begonnen hat, damit bereits dann die zweite Verschiebungslage (Fig. 2) des Schliessteils 10 gegenüber dem Aufnahmeteil 9 wieder erreicht und in Abhängigkeit hiervon das Schliessteil 10 aus seiner Schliessstellung in die Öffnungsstellung zurückverstellt wird, um anschliessend zusammen mit dem Aufnahmeteil 9 zu dessen dem Schlitz 5 entfernter zweiter Stellung mitgenommen werden zu können. Zur Verschiebung des Schliessteils 10 in dessen zweite Verschiebungslage vorgesehene Anschläge müssen daher eine derart geringe senkrecht zur Anlagefläche 1 gemessene Höhe haben, dass sie lediglich bei in Schliessstellung befindlichem Schliessteil 10, nicht jedoch bei in Öffnungsstellung befindlichem Schliessteil, aneinander anliegen. Als Anschläge zur Verschiebung des Schliessteils 10 in dessen zweite Verschiebungslage sind daher der der Ruhestellung des Kopfes 8 abgewandte, stirnseitige Rand 5a des Schlitzes 5 und der ihm benachbarte stirnseitige Rand 10a des Schliessteils 10 verwendet. Der Rand 10a weist eine Schrägstellung auf, um ein Hängenbleiben des Schliessteils 10 am Rand 5a bei der Rückstellung in die Öffnungsstellung und bei der anschliessenden Verschiebung in Richtung auf die dem Schlitz 5 entfernte zweite Stellung des Aufnahmeteils 9 zu vermeiden.

Zur Ermöglichung der Verstellung des Schliessteils 10 zwischen der Schliessstellung und der Öffnungsstellung sowie der Relativverschiebung gegenüber dem Aufnahmeteil 9 parallel zu dessen Verschiebungsrichtung ist der Schliessteil 10 im Aufnahmeteil 9 schwimmend gelagert, wobei nicht nur in bereits beschriebener Weise mittels der Anschläge 38, 50a, 50b eine Begrenzung des Bereiches der Relativverschiebung, sondern auch eine gegenseitige Führung in Richtung dieser Relativverschiebung gegenüber einer Verschiebung seitlich zu dieser Verschiebungsrichtung sowie eine Begrenzung des Verstellbereichs in Richtung senkrecht zur Anlagefläche 1 vorgesehen sind. Hierzu dienen ein in einer Führungstasche 20 des Aufnahmeteils 9 lose gehaltener Führungslappen 19 des Schliessteils 10, ein sich vom Schliessteil 10 nach rückwärts erstreckender Hakensteg 15 und auf der Rückseite des Schliessteils 10 in regelmässigen gegenseitigen Abständen entlang dessen Mittellinie vorgesehene, hohle Fortsätze 21a. Der Führungslappen 19 ist gegenüber der Aussen- oder Oberseite des Schliessteils 10 zurückgesetzt, schliesst hinter dessen Rand 10a an und erstreckt sich von der Ruhestellung des Kopfes 8 fort parallel zur Platte P unter diese. Die den Führungslappen 19 aufnehmende Führungstasche 20 begrenzt die Bewegung des der Ruhestellung des Kopfes 8 angewandten Endes des Schliessteils 10 bei dessen Bewegung in Richtung senkrecht zur Anlagefläche 1. In der Schliessstellung liegt die Oberseite des Führungslappens 19 an der dann als Anschlag dienenden oberen Innenseite 20a der Führungstasche 20 an. Bei in Öffnungsstellung befindlichem Schliessteil 10 liegt die Unterseite des Führungslappens 19 an der dann als Anschlag dienenden, unteren Innenseite 20b der Führungstasche 20 an. Weiter sitzen in der Öffnungsstellung die Fortsätze 21 des Schliessteils 10 mit ihren nach rückwärts gerichteten, ebenen Stirnseiten auf der ebenen, zum Schlitz 5 hin weisenden Oberseite 9b des Bodens des Aufnahmeteils 9 verschiebbar auf, so dass die Fortsätze 21 und diese Oberseite 9b als Anschläge zur Begrenzung des Stellbereichs bei Erreichen der Öffnungsstellung wirken. Um den Stellbereich bei Erreichen der Schliessstellung auch für das zur Ruhestellung des Kopfes 8 hin liegende Ende des Schliessteils 10 zu begrenzen, durchsetzt der am Schliessteil 10 angeformte Hakensteg 15 einen sich in Richtung der gegenseitigen Verschiebung von Aufnahmeteil 9 und Schliessteil 10, also parallel zum Schlitz 5 erstreckenden Aufnahmeschlitz 16, der im Boden des Aufnahmeteils 9 gebildet ist, und hintergreift hinter dem Aufnahmeschlitz 16 den Boden des Aufnahmeteils 9 mit einem Haken 15a, der bei Erreichen der Schliessstellung an der Rückseite 9a des Bodens zur Anlage kommt, wie dies in Fig. 4 sichtbar ist. Die in Richtung des Schlitzes 5 gemessene Länge des Aufnahmeschlitzes 16 ist grösser als die Summe der in dieser Richtung gemessenen Breite des Hakensteges 15 und der in dieser Richtung gemessenen Breite einer Ausnehmung 50 (Fig. 7), so dass der Aufnahmeschlitz 16 die Relativverschiebung zwischen Schliessteil 10 und Aufnahmeteil 9 nicht behindert oder begrenzt. Dagegen erfolgt mittels des im Aufnahmeschlitz 16 seitlich zur Verschiebungsrichtung unverschiebbar gehaltenen Hakenstegs 15 ebenso wie mittels des in der Führungstasche 20 seitlich unverschiebbar gehaltenen Führungslappens 19 eine Führung des Schliessteils 10 an dem Aufnahmeteil 9 parallel zu deren gemeinsamer Verschiebungsrichtung. Um den Haken 15a des Hakensteges bei der Montage des Schliessteils 10 am Aufnahmeteil 9 durch den Aufnahmeschlitz 16 hindurchdrücken zu können, ohne dass eine bleibende Verformung von dessen Wandungen erzeugt wird, verläuft parallel zum Aufnahmeschlitz 16 ein zusätzlicher Schlitz 18, so dass zwischen beiden ein Steg 17 im Boden des Aufnahmeteils 9 gebildet ist, der seitlich zur Richtung des Aufnahmeschlitzes 16 federelastisch nachgiebig ist. Der weitere Schlitz 18 liegt zweckmässig auf der dem Haken 15a gegenüberliegenden Seite des Hakensteges 15, so dass der Haken 15a nicht mit dem Steg 17, sondern mit dem diesem gegenüberliegenden Bereich der Unterseite 9a als Anschlag zusammenwirkt, wo eine elastische Verformung praktisch nicht auftritt. Mittels des Hakensteges 15 und des Führungslappens 19 ist das Schliessteil 10 nach seiner Montage unverlierbar mit dem Aufnahmeteil 9 verbunden.

Während vorstehend eine Begrenzung des Verstellbereichs des Schliessteils 10 durch an diesem und am Aufnahmeteil 9 vorgesehene Anschläge 9a, 15a; 19, 20a beschrieben wurde, sei bemerkt, dass gewünschtenfalls eine Begrenzung des Verstellbereichs bei Erreichen der Schliessstellung auch dadurch erfolgen kann, dass dann Anschläge des Schliessteils 10 mit bezüglich der Platte P ortsfesten Anschlägen zusammenwirken, beispielsweise indem an den Längsrändern des Schliessteils 10 vorgesehene Anschläge auf die Rückseite der Platte P auftreffen. Es ist jedoch ohne weiteres ersichtlich, dass hierdurch die Wandungen 13 (Fig. 4) weiter beabstandet angeordnet werden müssten, was zu einer Erhöhung des Bauaufwandes führen würde, und dass eine Justierung des Abstandes des in Schliessstellung befindlichen Schliessteils 10 vom Aufnahmeteil 9 erschwert würde, während dieser Abstand im Hinblick auf die nachstehend zu beschreibende Antriebsvorrichtung zur Verstellung des Schliessteils 10 gegenüber dem Aufnahmeteil 9 möglichst genau bemessen sein sollte.

Als durch die Relativverschiebung zwischen Schliessteil 10 und Aufnahmeteil 9 mechanisch steuerbare Antriebsvorrichtung sind Permanentmagnete 11a, 11b vorgesehen. Drei würfelförmige Permanentmagnete 11a sind in den Hohlräumen der Fortsätze 21a des Schliessteils 10 und somit in regelmässigen gegenseitigen Abständen derart gehalten, dass ihre vom Schlitz 5 fortweisenden Nordpole N an den rückseitigen Stirnflächen dieser Fortsätze 21a liegen. Die Permanentmagnete 11b, die in Form und Grösse den Permanentmagneten 11a gleichen, sind in ebenfalls gleichartigen, gegenseitigen Abständen in im Boden des Aufnahmeteils 9 gebildeten Ausnehmungen 21b (Fig. 7) derart gehalten, dass ihre dem Schlitz 5 zugewandten Nordpole mit der Oberseite 9b des Bodens des Aufnahmeteils 9 fluchten und dass in der ersten Verschiebungslage (Fig. 1) jeweils zwei Permanentmagnete 11a, 11b mit miteinander fluchtenden Nord-Süd-Achsen paarweise einander gegenüberliegen und im Sinne einer gegenseitigen Abstossung wirken. Aufgrund dieser abstossenden Kräfte wird das Schliessteil 10 in die Schliessstellung verstellt. Bei der zweiten Verschiebungslage (Fig. 2, 3) überwiegen dagegen zwischen den Permanentmagneten 11a, 11b jedes Paares die anziehenden Kräfte, so dass das Schliessteil 10 in seiner Öffnungslage gehalten bzw. bei einer Verschiebung von der ersten in die zweite Verschiebungslage in die Öffnungsstellung verstellt und bei einer Verschiebung aus der zweiten in die erste Verschiebungslage in die Schliessstellung verstellt wird.

Es lässt sich zeigen, dass die Kraftwirkung zwischen einem Paar von Permanentmagneten 11a, 11b, deren Nord-Süd-Achsen wie beim Ausführungsbeispiel parallel zueinander und senkrecht zur Anlagefläche 1 stehen und deren gleichnamige Pole (Nordpole N) einander zugewandt sind, einen charakteristischen Verlauf in Abhängigkeit vom Verschiebungsabstand der Nord-Süd-Achsen hat. Bei miteinander fluchtenden Nord-Süd-Achsen ergibt sich eine abstossende Kraftwirkung. Bei zunehmender Verschiebung nimmt die abstossende Kraft dem Betrage nach ab. Vernachlässigt man den durch die Verstellung des Schliessteils 10 aus der Öffnungsstellung in die Schliessstellung auftretenden Spalt zwischen beiden Permanentmagneten 11a, 11b und nimmt also an, dass deren einander zugewandte, gleichnamige Pole in derselben Ebene, nämlich der Oberseite 9b des Bodens des Aufnahmeteils 9 liegen, so ergibt sich ein Nullpunkt der Kraft bei einem Verschiebungsabstand, der etwas geringer als die in Richtung der Nord-Süd-Achsen gemessene Höhe der Permanentmagnete 11a, 11b ist. Bei weiter vergrössertem Verschiebungsabstand kehrt die Kraftwirkung ihre Vorzeichen um, d.h. es tritt eine Anziehung zwischen den Permanentmagneten 11a, 11b eines Paares auf, und diese Kraft hat eine Richtungskomponente senkrecht zur Anlagefläche 1, wirkt also im Sinne eines Haltens des Schliessteils 10 in der Öffnungsstellung am Aufnahmeteil 9. Dabei wird bereits relativ kurz nach dem Nulldurchgang der Kraft ein Maximum der anziehenden Kraft durchlaufen, während bei noch weiter anwachsendem Verschiebungsabstand der Betrag der anziehenden Kraft wieder abnimmt. Auch unter Berücksichtigung des tatsächlich bei der Schliessstellung auftretenden Spaltes zwischen den Permanentmagneten 11a, 11b bleibt dieser Verlauf der Kraftwirkung in Abhängigkeit vom Verschiebungsabstand im wesentlichen erhalten. Daraus folgt, dass der Verschiebungsabstand oder der Verschiebungsbereich zwischen der ersten und der zweiten Verschiebungslage des Schliessteils 10 gegenüber dem Aufnahmeteil 9 zweckmässig annähernd so gross wie die senkrecht zur Anlagefläche 1 gemessene Höhe eines Permanentmagneten 11a oder 11b, bzw. bei unterschiedlicher Höhe dieser Permanentmagnete 11a, 11b annähernd so gross wie die grössere dieser Höhen gewählt wird. Da nun jedoch andererseits dieser Verschiebungsbereich der Relativverschiebung möglichst klein sein soll, damit bei einer Verschiebung des Aufnahmeteils 9 aus seiner dem Schlitz 5 benachbarten ersten Stellung (Fig. 1) heraus in Richtung auf die zweite Stellung das Schliessteil 10 möglichst schnell aus seiner ersten Verschiebungslage und seiner Schliessstellung (Fig. 1) in seine zweite Verschiebungslage und seine Öffnungsstellung (Fig. 2) verstellt wird, ist es zweckmässig, den Permanentmagneten 11a, 11b eine höchstens dem Verschiebungsbereich der Relativverschiebung (Weite einer Ausnehmung 50 abzüglich Dicke eines Anschlags 38) gleiche und zweckmässig wie beim Ausführungsbeispiel eine gegenüber diesem Verschiebungsbereich geringfügig geringere senkrecht zur Anlagefläche 1 gemessene Höhe zu geben. Dies ist bei der Würfelform der Permanentmagneten 11a, 11b verwirklicht. Die relativ geringen Abmessungen dieser Permanentmagnete 11a, 11b sind im übrigen auch günstig zur Erzielung einer geringen Masse des Schliessteils 10 und des Aufnahmeteils 9.

Beim Ausführungsbeispiel, bei dem die Anlagefläche 1 waagerecht angeordnet ist, kann grundsätzlich der Bereich der Relativverschiebung zwischen Schliessteil 10 und Aufnahmeteil 9 parallel zur Verschiebungsrichtung des letzteren so gering gewählt werden, dass in der zweiten Verschiebungslage noch keine Anziehung zwischen den Permanentmagneten 11a, 11b auftritt, sondern lediglich die abstossende Kraft so gering oder zu Null geworden ist, dass das Schliessteil 10 aufgrund seines Gewichtes in die Öffnungsstellung zurückkehrt. Eine erhöhte Sicherheit der Funktion bei der Verstellung aus der Schliessstellung in die Öffnungsstellung wird jedoch durch die beschriebene Bemessung des Bereichs der Relativverstellung erreicht, bei der in der zweiten Verschiebungslage eine Anziehung zwischen den Permanentmagneten 11a, 11b auftritt. Bei dieser Bemessung ist es daher im übrigen auch möglich, die Platte P anders als in der beschriebenen waagerechten Stellung anzuordnen, beispielsweise in lotrechter Richtung.

Eine durch die Relativverschiebung zwischen Schliessteil 10 und Aufnahmeteil 9 mechanisch steuerbare Antriebsvorrichtung für die Verstellung des Schliessteils 10 zwischen Schliessstellung und Öffnungsstellung kann ausser unter Verwendung von Permanentmagneten 11a, 11b auch in anderer Weise verwirklicht werden. Beispielsweise könnte der Schliessteil 10 mittels Schrägflächen derart auf dem Aufnahmeteil 9 aufsitzen, dass die Relativverschiebung in einer Richtung zur Vergrösserung des Abstandes zwischen diesen beiden Teilen und damit zur Verstellung in die Schliessstellung und eine umgekehrte Relativverschiebung zur Verstellung in die Öffnungsstellung führt. Derartige, rein mechanisch wirkende Antriebsmittel hätten jedoch den Nachteil, dass in ihnen Reibungskräfte zu überwinden sind, die die Leichtgängigkeit behindern würden und zu Abriebprodukten (Staub) führen könnten. Die vorstehend beschriebene Ausführungsform vermeidet solche Nachteile.

Die mechanische Steuerung der Verstellung des Schliessteiles 10 zwischen Öffnungsstellung und Schliessstellung muss nicht notwendig durch feststehende Anschläge erfolgen, sondern kann beispielsweise auch dynamisch erfolgen. So kann bei genügender Anfahrgeschwindigkeit des Aufnahmeteiles 9 bei dessen Verstellung aus der dem Schlitz 5 benachbarten ersten Stellung (Fig. 1) in dessen zweite Stellung (Fig. 3) das Schliessteil 10 aufgrund seiner Massenträgheit gegenüber dem Aufnahmeteil 9 zurückbleiben und hierdurch aus der ersten Verschiebungsanlage in die zweite Verschiebungslage gebracht werden, ohne dass hierfür die oben als Anschläge erwähnten Ränder 5a, 10a miteinander in Eingriff kommen müssten. Selbst wenn letzteres wie beim Ausführungsbeispiel vorgesehen ist, weil dem Schliessteil 10 zweckmässig eine geringe Masse und damit eine geringe Massenträgheit gegeben wird, so erleichtert jedenfalls die erwähnte Wirkung der Massenträgheit die Relativverstellung aus der ersten Verschiebungsstellung in die zweite Verschiebungsstellung.

Der Magnetkopf 8 ist in einem Traggestell 23 gelagert, welches mittels zweier sich parallel zueinander und zumindest annähernd parallel zum Schlitz 5 erstreckender Blattfedern 24 mit einem Schlitten 26 verbunden ist. Dieser ist an zwei parallel zueinander und zur Längsrichtung des Schlitzes 5 verlaufenden Wellen 25 (Fig. 4) verschiebbar geführt. Die voneinander beabstandeten Blattfedern 24 wirken als Gelenkparallelogramm, mittels dessen der Kopf 8 in Richtung senkrecht zur Anlagefläche beweglich ist. Der Schlitten 26 und damit der Kopf 8 werden mittels eines endlosen Riemens 27 verschoben, mit dessen einem Trum der Schlitten 26 über ein Verbindungsstück 28 fest verbunden ist. Der Riemen wird von einem unter der Platte P gehaltenen Elektromotor 29 angetrieben. Die Bewegung des Kopfes 8 senkrecht zur Anlagefläche 1 erfolgt abhängig von seiner Verschiebung parallel zur Platte, wozu unterhalb von dieser eine Steuerbahn 30 vorgesehen ist, an der ein am Traggestell 23 angeordneter Gleitstein 31 oder auch eine entsprechende Rolle läuft. Die Blattfedern 24 sind so vorgespannt, dass sie den Kopf 8 nach oben in die Arbeitsstellung vorspannen, so dass der Gleitstein 31 stets unter Druck an der Steuerbahn 30 anliegt. Letzterer verläuft so, dass der Kopf 8 in der Ruhestellung unterhalb der Platte P gehalten wird, während die Steuerbahn 30 in dem zur Ruhestellung des Kopfes 8 hin liegenden Anfangsbereich des Schlitzes 5 allmählich nach oben zur Platte P hin ansteigt, um dann im übrigen Bereich des Schlitzes 5 geradlinig parallel zur Anlagefläche 1 weiter zu verlaufen, jedoch mit geringerem Abstand zur Anlagefläche 1 als im Bereich der Ruhestellung des Kopfes 8, so dass der Kopf 8 in der Arbeitsstellung in den Schlitz 5 eintaucht und erforderlichenfalls sogar geringfügig aus dessen Oberseite herausragt. Die Bewegung des Kopfes 8 senkrecht zur Anlagefläche 1 wird im übrigen zwischen zwei Endstellungen mittels eines Anschlagkörpers 33 begrenzt, zwischen dessen beide Anschlagflächen ein Anschlagfortsatz 32 des Traggestelles 23 eingreift.

Zur Verschiebung des Aufnahmeteiles 9 zusammen mit dem Kopf 8 ist am Schlitten 26 ein Mitnehmer 34 vorgesehen, der in eine am Boden des Aufnahmeteiles 9 vorgesehene Aussparung 35 eingreift.

In der zur Richtung des Schlitzes 5 senkrechten Transportrichtung des Beleges 2 vor und hinter dem Schlitz 5 sind Transportrollen 36 (Fig. 4) unterhalb und oberhalb der Anlagefläche 1 angeordnet, die motorisch antreibbar sind und die den Beleg 2 durch den Bereich des Schlitzes 5 hindurch transportieren. Eine bezüglich der Transportrichtung des Beleges 2 vor dem Schlitz 5 angeordnete Lichtschranke 37 (Fig. 4) erfasst das Vorhandensein eines zu bearbeitenden Beleges 2.

**Patentansprüche**

1. Belegbearbeitungsvorrichtung mit einer Platte (P), deren eine Seite als Anlagefläche (1) für Belege (2) dient, und mit einem zum Lesen von Aufzeichnungen und/oder zum Aufzeichnen ausgebildeten Kopf (8), der nahe der der Anlagefläche (1) abgewandten Rückseite der Platte (P) verstellbar angebracht ist, sodass er in einer Arbeitsstellung mit einem auf der Anlagefläche (1) befindlichen Beleg (2) durch einen in der Platte (P) ausgenommenen Schlitz (5) hindurch zusammenarbeitet, dadurch gekennzeichnet, dass der Kopf (8) in eine von dem Schlitz (5) beabstandete, hinter der Rückseite der Platte (P) liegende Ruhestellung verstellbar ist, dass benachbart der Rückseite der Platte (P) ein Aufnahmeteil (9) in Abhängigkeit von den Verstellbewegungen des Kopfes (8) zwischen einer dem Schlitz (5) benachbarten ersten Stellung und einer vom Schlitz (5) entfernten zweiten Stellung parallel zu der Platte (P) verschiebbar ist, dass das Aufnahmeteil (9) ein Schliessteil (10) trägt, das gegenüber dem Aufnahmeteil (9) in Richtung senkrecht zur Anlagefläche (1) zwischen einer Schliessstellung, in der es innerhalb des Schlitzes (5) liegt und diesen zumindest teilweise verschliesst, und einer hinter der Platte (P) liegenden Öffnungsstellung verstellbar ist, und dass Mittel (11a, 11b) vorgesehen sind, die bei Erreichen der dem Schlitz (5) benachbarten ersten Stellung des Aufnahmeteiles (9) die Verstellung des Schliessteiles (10) in die Schliessstellung und bei einer Verschiebung des Aufnahmeteiles (9) aus dessen erster Stellung heraus die Verstellung des Schliessteiles (10) in die Öffnungsstellung bewirken.

2. Belegbearbeitungsvorrichtung nach Anspruch 1, dadurch gekennzeichnet, dass das Aufnahmeteil (9) hin- und hergehend verschiebbar ist, dass das Schliessteil (10) gegenüber dem Aufnahmeteil (9) parallel zu dessen Verschiebungsrichtung um einen gegenüber dem Verschiebungsweg zwischen der ersten Stellung und der zweiten Stellung des Aufnahmeteiles (9) vorzugsweise mehrfach kürzeren Verschiebungsweg zwischen einer ersten Verschiebungslage und einer zweiten Verschiebungslage verschiebbar ist, dass Mittel (38, 39) zu einer der Verschiebungsrichtung des Aufnahmeteiles (9) entgegengesetzten Verschiebung des Schliessteiles (10) in die erste Verschiebungslage bei einer Verschiebung des Aufnahmeteiles (9) in dessen dem Schlitz (5) benachbarte erste Stellung und Mittel (5a, 10a) zu einer der Verschiebungsrichtung des Aufnahmeteiles (9) entgegengesetzten Verschiebung des Schliessteiles (10) in die zweite Verschiebungslage bei einer Verschiebung des Aufnahmeteiles (9) aus dessen erster Stellung heraus in Richtung auf dessen zweite Stellung vorgesehen sind und dass als Mittel zur Verstellung des Schliessteiles (10) in Richtung senkrecht zur Anlagefläche (1) Antriebsmittel (11a, 11b) vorgesehen sind, die in mechanisch gesteuerter Abhängigkeit von den Verschiebungslagen des Schliessteiles (10) gegenüber dem Aufnahmeteil (9) die Verstellung des Schliessteiles (10) bei dessen erster Verschiebungslage in die Schliessstellung und bei dessen zweiter Verschiebungslage in die Öffnungsstellung bewirken.

3. Belegbearbeitungsvorrichtung nach Anspruch 2, dadurch gekennzeichnet, dass als Mittel zur Verschiebung des Schliessteiles (10) gegenüber dem Aufnahmeteil (9) parallel zu dessen Verschiebungsrichtung mindestens ein Anschlag (5a, 39) vorgesehen ist, der gegenüber der Platte (P) ortsfest ist und der mit einem an dem Schliessteil (10) gebildeten Anschlag (10a, 38) zusammenwirkt, wobei vorzugsweise zur Verschiebung des Schliessteiles (10) in dessen erste Verschiebungslage vorgesehene Anschläge (38, 39) eine genügend grosse senkrecht zur Anlagefläche (1) gemessene Höhe haben, um bei dem Schlitz (5) benachbarter erster Stellung des Aufnahmeteiles (9) sowohl bei Öffnungsstellung als auch bei Schliessstellung des Schliessteiles (10) aneinander anzuliegen und wobei vorzugsweise zur Verschiebung des Schliessteiles (10) in dessen zweite Verschiebungslage vorgesehene, insbesondere von Rändern (5a, 10a) des Schlitzes (5) und des Schliessteiles (10) gebildete Anschläge eine derart geringe senkrecht zur Anlagefläche (1) gemessene Höhe haben, dass sie lediglich bei in Schliessstellung befindlichem Schliessteil (10) aneinander anliegen.

4. Belegbearbeitungsvorrichtung nach einem der vorangehenden Ansprüche, dadurch gekennzeichnet, dass als Mittel zur Verstellung des Schliessteiles (10) in Richtung senkrecht zur Anlagefläche (1) mindestens ein Magnet, vorzugsweise ein Permanentmagnet (11a, 11b) vorgesehen ist.

5. Belegbearbeitungsvorrichtung nach Anspruch 4 in Abhängigkeit von Anspruch 2 oder 3, dadurch gekennzeichnet, dass am Aufnahmeteil (9) und am Schliessteil (10) Permanentmagnete (11a, 11b) vorgesehen sind, die in der ersten Verschiebungslage im Sinne einer gegensinnigen Abstossung paarweise zusammenwirken, wobei vorzugsweise die Permanentmagnete (11a, 11b) eines Paares mit senkrecht zur Anlagefläche (1) stehenden Nord-Süd-Achsen und miteinander zugewandten gleichnamigen Polen (N) angeordnet sind und in der ersten Verschiebungslage miteinander fluchten, wobei weiter vorzugsweise der Bereich der Verstellung des Schliessteiles (10) gegenüber dem Aufnahmeteil (9) in Richtung senkrecht zur Anlagefläche (1) mittels mindestens eines bei Erreichen der Öffnungsstellung wirksamen Anschlages (19, 21) des Schliessteiles (10) begrenzt ist, der mit einem entsprechenden Anschlag (9b, 20b) des Aufnahmeteiles (9) derart zusammenwirkt, dass bei der Öffnungsstellung die einander zugekehrten Pole der Permanentmagnete (11a, 11b) eines Paares von Permanentmagneten (11a, 11b) zumindest annähernd in derselben Ebene (9b) liegen, und wobei vorzugsweise die senkrecht zur Anlagefläche (1) gemessene Höhe der Permanentmagnete (11a, 11b) annähernd so gross ist wie der Abstand der ersten Verschiebungslage von der zweiten Verschiebungslage.

6. Belegbearbeitungsvorrichtung nach einem der vorangehenden Ansprüche, dadurch gekennzeichnet, dass der Kopf (8) in Längsrichtung des Schlitzes (5) zwischen der Arbeitsstellung und der Ruhestellung hin- und hergehend verstellbar ist, dass das Aufnahmeteil (9) in Längsrichtung des Schlitzes (5) verschiebbar geführt ist und dass die Verstellung des Kopfes (8) und die Verschiebung des Aufnahmeteiles (9) gleichzeitig und gleichsinnig erfolgen.

7. Belegbearbeitungsvorrichtung nach Anspruch 6, dadurch gekennzeichnet, dass ein Mitnehmer (34) eines den Kopf (8) tragenden, entlang Führungen (25) motorisch verschiebbaren Schlittens (26) in eine Aussparung (35) des Aufnahmeteiles (9) eingreift, wobei vorzugsweise der Kopf (8) in Richtung senkrecht zur Anlagefläche (1) insbesondere mittels einer federelastischen Aufhängung (24) beweglich an dem Schlitten (26) gehalten und mittels einer Steuerbahn (30) zwischen der in den Schlitz (5) hineinragenden Arbeitsstellung und der seitlich ausserhalb des Bereiches des Schlitzes (5) der Rückseite der Platte (P) benachbart liegenden Ruhestellung zwangsgeführt ist.

8. Belegbearbeitungsvorrichtung nach einem der vorangehenden Ansprüche, dadurch gekennzeichnet, dass das vorzugsweise als einstückiges Kunststoffteil gebildete Aufnahmeteil (9) als langgestreckter, sich parallel zu dem Schlitz (5) erstreckender Kasten ausgebildet ist, der mittels an seinen beiden Aussenseiten vorgesehenen Führungsmitteln (12) und an der Rückseite der Platte (P) vorgesehenen Führungsmitteln (14) verschiebbar geführt ist und der vorzugsweise mit Versteifungsrippen (22b) versehen ist.

9. Belegbearbeitungsvorrichtung nach einem der vorangehenden Ansprüche, dadurch gekennzeichnet, dass das vorzugsweise als einstückiges Kunststoffteil gebildete Schliessteil (10) eine Leiste mit konvex gewölbter Beleg-Überlauffläche bildet, die vorzugsweise auf ihrer Unterseite Versteifungsrippen (22a) aufweist.

10. Belegbearbeitungsvorrichtung nach einem der vorangehenden Ansprüche, dadurch gekennzeichnet, dass der Bereich der Verstellung des Schliessteiles (10) gegenüber dem Aufnahmeteil (9) in Richtung senkrecht zur Anlagefläche (1) mittels mindestens eines bei Erreichen der Schliessstellung wirksamen Anschlages (15a, 19) des Schliessteiles (10) begrenzt ist, der mit einem entsprechenden Anschlag (9a, 20) des Aufnahmeteiles (9) zusammenwirkt, wobei vorzugsweise das Schliessteil (10) einen angeformten Hakensteg (15) aufweist, der einen sich in Richtung der gegenseitigen Verschiebung von Aufnahmeteil (9) und Schliessteil (10) erstreckenden Aufnahmeschlitz (16) des Aufnahmeteiles (9) durchsetzt und dessen den Aufnahmeschlitz (16) hintergreifender Haken (15a) als bei Erreichen der Schliessstellung wirksamer Anschlag dient, und wobei vorzugsweise das Schliessteil (10) an einem Ende einen Führungslappen (19) aufweist, der in einer den genannten Bereich der Verstellung begrenzenden Führungstasche (20) des Aufnahmeteiles (9) beweglich gehalten ist.

## Claims

1. Document-processing apparatus with a plate (P), one side of which serves as a contact surface (1) for documents (2), and with a head (8) which is designed for reading recordings and/or for recording and which is displaceably arranged near the reverse side of the plate (P) remote from the contact surface (1), so that in a working position the head cooperates with a document (2), situated on the contact surface (1), through a slot (5) provided in the plate (P), characterised in that the head (8) is displaceable into a rest position situated at a distance from the slot (5) and lying behind the reverse side of the plate (P), in that adjacent the reverse side of the plate (P) a receiving part (9), depending on the displacement movements of the head is displaceable parallel to the plate (P) between a first position adjacent the slot (5) and a second position remote from the slot (5), in that the receiving part (9) carries a closing part (10) which in relation to the receiving part (9) in a direction perpendicular to the contact surface (1) is displaceable between a closed position, in which it lies within the slot (5) and closes this latter at least partly, and an open position lying behind the plate (P) and in that means (11a, 11b) are provided which, upon reaching the first position of the receiving part (9) adjacent the slot (5), effect the displacement of the closing part (10) into the closed position and, upon displacement of the receiving part (9) from its first position, cause the displacement of the closing part (10) into the open position.

2. Document-processing apparatus according to claim 1, characterized in that the receiving part (9) is displaceable in reciprocating motion, in that, relative to the receiving part (9) and parallel to its displacement direction, the closing part (10) is displaceable by a displacement travel between a first displacement position and second displacement position, which displacement travel is preferably several times shorter than the displacement travel between the first position and the second position of the receiving part (9), in that means (38, 39) are provided for a displacement of the closing part (10), opposed to the displacement direction of the receiving part (9), into the first displacement position upon displacement of the receiving part (9) into its first position adjacent the slot (5), and means (5a, 10a) are provided for a displacement of the closing part (10), opposed to the displacement direction of the receiving part (9) into the second displacement position upon displacement of the receiving part (9) from its first position towards its second position, and in that as means for displacing the closing part (10) in a direction perpendicular to the contact surface (1) there are provided drive means (11a, 11b) which, in mechanically controlled dependence on the displacement positions of the closing part (10) in relation to the receiving part (9), cause the displacement of the closing part (10) in its first displacement position into the closed position and in its second displacement position into the open position.

3. Document-processing apparatus according to claim 2, characterised in that at least one stop member (5a, 39) is provided as means for displacing the closing part (10) relative to the receiving part (9) and parallel to its displacement direction, which stop member is stationary relative to the plate (P) and which cooperates with a stop member (10a, 38) formed on the closing part (10) in which case stop members (38, 39) preferably provided for displacing the closing part (10) into its first displacement position, are of sufficiently great height measured perpendicularly to the contact surface (1) so that, in the first position of the receiving part (9) adjacent the slot (5) they abut against one another both in the open position and in the closed position of the closing part (10), and in which case stop members, preferably provided for displacing the closing part (10) into its second closing position and in particular formed by edges (5a, 10a) of the slot (5) and of the closing part (10) are of such a small height measured perpendicularly to the constant surface (1) that they abut against one another only when the closing part (10) is situated in the closed position.

4. Document-processing apparatus according to one of the preceding claims, characterised in that at least one magnet, preferably a permanent magnet (11a, 11b) is provided as means for displacing the closing part (10) in a direction perpendicular to the contact surface (1).

5. Document-processing apparatus according to claim 4 dependent upon claim 2 or claim 3, characterised in that permenent magnets (11a, 11b) are provided on the receiving part (9) and on the closing part (10), which permanent magnets in the first displacement position cooperate in pairs in the sense of a repulsion in opposite directions, in which case preferably the permanent magnets (11a, 11b) of one pair are arranged with north-south axes lying perpendicular to the contact surface (1) and with like poles (N) facing one another and are aligned with one another in the first displacement position, in which case also preferably the range of displacement of the closing part (10) relative to the receiving part (9) is delimited in a direction perpendicular to the contact surface (1) by means of at least one stop member (19, 21) of the closing part (10), which stop member is operative upon reaching the open position and which cooperates with a corresponding stop member (9b, 20b) of the receiving part (9) in such a way that, in the open position, the mutually facing poles of the permanent magnets (11a, 11b) of one pair of permanent magnets (11a, 11b) lie at least approximately in the same plane (9b), and in which case preferably the height of the permanent magnets (11a, 11b) measured perpendicularly to the contact surface (1) is approximately as great as the distance of the first displacement position from the second displacement position.

6. Document-processing apparatus according to one of the preceding claims, characterised in that the head (8) is displaceable in reciprocating motion in the longitudinal direction of the slot (5) between the working position and the rest position, in that the receiving part (9) is guided displaceably in the longitudinal direction of the slot (5) and in that the displacement of the head (8) and the displacement of the receiving part (9) take place simultaneously and in the same direction.

7. Document-processing apparatus according to claim 6, characterised in that a drive member (34) of a carriage (26), which carriage carries the head (8) and can be moved by motor along guides (25), engages in a recess (35) of the receiving part (9), in which case preferably the head (8) is retained movably on the carriage (26) in a direction perpendicular to the contact surface (1), in particular by means of a resiliently flexible suspension (24), and is constrained automatically to be guided by means of a guide track (30) between the working position extending into the slot (5) and the rest position situated laterally outside the region of the slot (5) and adjacent the reverse side of the plate (P).

8. Document-processing apparatus according to one of the preceding claims, characterised in that the receiving part (9), preferably formed as a one-piece plastics part, is in the form of an elongate box extending parallel to the slot (5), which box is guided displaceably by means of guide means (12) provided on both its outer sides and guide means (14) provided on the reverse side of the plate (P) and which box is preferably provided with stiffening ribs (22b).

9. Document-processing apparatus according to one of the preceding claims, characterised in that the closing part (10) preferably formed as a one-piece plastics part forms a strip with convexly curved document over-run surface, which preferably on its underside has stiffening ribs (22a).

10. Document-processing apparatus according to one of the preceding claims, characterised in that the range of displacement of the closing part (10) relative to the receiving part (9) is bounded in a direction perpendicular to the contact surface (1) by means of at least one stop member (15a, 19) of the closing part (10) which stop member is operative upon reaching the closed position and which cooperates with a corresponding stop member (9a, 20) of the receiving part, in which case preferably the closing part (10) has an integrally formed hooked web (15) which passes through a receiving slot (16) of the receiving part (9) extending in the direction of the mutual displacement of receiving part (9) and closing part (10) and whose hook (15a) engaging behind the receiving slot (16) serves as a stop member operative when the closed position is reached, and in which case preferably the closing part (10) has at one end a guide tongue (19) which is held movably in a guide pocket (20) of the receiving part (9) defining said range of displacement.

**Revendications**

1. Dispositif de traitement de documents comportant une plaque (P) dont un côté sert de surface d'appui (1) pour des documents (2), et une tête (8) réalisée pour enregistrer et/ou lire des enregistrements, qui est placée près du côté postérieur de la plaque (P) opposé à la surface d'appui (1) et peu s'y déplacer, de sorte que, dans une position de travail, elle coopère à travers une fente (5) ménagée dans la plaque (P) avec un document (2) se trouvant sur la surface d'appui (1), caractérisé en ce que la tête (8) peut se déplacer dans une position de repos située derrière le côté postérieur de la plaque (P), distante de la fente (5), qu'au voisinage du côté postérieur de la plaque (P) un élément support (9) peut se déplacer parallèlement à la plaque (P) selon les mouvements de déplacement de la tête (8) entre une première position voisine de la fente (5) et une seconde position éloignée de la fente (5), que l'élément support (9) porte un élément de fermeture (10) qui peut être déplacé par rapport à l'élément support (9) dans une direction perpendiculaire à la surface d'appui (1), entre une position de fermeture dans laquelle il se trouve à l'intérieur de la fente (5) et obture celle-ci, au moins partiellement, et une position d'ouverture située derrière la plaque (P), et qu'on prévoit des moyens (11a, 11b) qui, lorsque l'élément support (9) atteint la première position voisine de la fente (5), provoquent le déplacement de l'élément de fermeture (10) dans la position de fermeture, et qui, lorsque l'élément support (9) quitte sa première position, provoquent le déplacement de l'élément de fermeture (10) dans la position d'ouverture.

2. Dispositif de traitement de documents selon la revendication 1, caractérisé en ce que l'élément support (9) peut se déplacer dans les deux sens, que l'élément de fermeture (10) peut se déplacer par rapport à l'élément support (9) parallèlement au sens de déplacement de celui-ci, d'un trajet plusieurs fois plus court entre une première position de translation et une deuxième position de translation, que le trajet de déplacement entre la première et la seconde position de l'élément support (9), qu'on prévoit des moyens (38, 39) pour déplacer l'élément de fermeture (10) en sens inverse du sens déplacement de l'élément support (9), dans la première position de translation, lors du déplacement de l'élément support (9) dans sa première position voisine de la fente (5), et des moyens (5a, 10a) pour déplacer l'élément de fermeture (10) en sens inverse du sens de déplacement de l'élément support (9), dans la seconde position de translation lors d'un déplacement de l'élément support de sa première position vers sa deuxième position, et qu'on prévoit comme moyens pour déplacer l'élément de fermeture (10) perpendiculairement à la surface d'appui (1) des moyens d'entraînement (11a, 11b) qui provoquent, en fonction d'une commande mécanique des positions de translation de l'élément de fermeture (10) par rapport à l'élément support (9), le déplacement de l'élément de fermeture (10) dans la position de fermeture, dans la première position de translation de celui-ci, et son déplacement dans la position d'ouverture, dans sa seconde position de translation.

3. Dispositif de traitement de documents selon la revendication 2, caractérisé en ce qu'on prévoit comme moyens pour déplacer l'élément de fermeture (10) par rapport à l'élément support (9) parallèlement au sens de déplacement de celui-ci, au moins une butée (5a, 39) qui est fixe par rapport à la plaque (P) et qui coopère avec une butée (10a, 38) formée sur l'élément de fermeture (10), les butées (38, 39) prévues pour déplacer l'élément de fermeture (10) dans sa première position de translation ayant une hauteur, mesurée perpendiculairement à la surface d'appui (1), suffisante pour s'appuyer l'une contre l'autre dans la première position de l'élément support (9) voisine de la fente (5), aussi bien que dans la position d'ouverture et dans la position de fermeture de l'élément de fermeture (10), et les butées formées notamment par les bords (5a, 10a) de la fente (5) et de l'élément de fermeture (10), prévues de préférence pour déplacer l'élément de fermeture (10) dans sa seconde position de translation ayant une hauteur, mesurée perpendiculairement à la surface d'appui (1), suffisamment faible pour qu'elles appuient l'une contre l'autre seulement lorsque l'élément de fermeture (10) se trouve en position de fermeture.

4. Dispositif de traitement de documents selon l'une des revendications précédentes, caractérisé en ce qu'on prévoit comme moyens pour déplacer l'élément de fermeture (10) perpendiculairement à la surface d'appui (1) au moins un aimant, de préférence un aimant permanent (11a, 11b).

5. Dispositif de traitement de document selon la revendication 4, en liaison avec la revendication 2 ou 3, caractérisé en ce qu'on prévoit sur l'élément support (9) et sur l'élément de fermeture (10) des aimants permanents (11a, 11b) qui, dans la première position de translation, coopèrent par paire en se repoussant mutuellement, les aimants permanents (11a, 11b) d'une paire étant de préférence disposés avec leurs axes nord-sud perpendiculaires à la surface d'appui (1) et leurs pôles de même polarité (N) tournés l'un vers l'autre et étant alignés l'un avec l'autre dans la première position de translation, la zone de déplacement de l'élément de fermeture (10) par rapport à l'élément support (9) perpendiculairement à la surface d'appui (1) étant de préférence limitée au moyen d'au moins une butée (19, 21) de l'élément de fermeture (10) qui agit lorsque la position d'ouverture est atteinte et coopère avec une butée correspondante (9b, 20b) de l'élément support en sorte que, dans la position d'ouverture, les pôles tournés l'un vers l'autre des aimants d'une paire d'aimants permanents (11a, 11b) se trouvent au moins approximativement dans le même plan (9b), et la hauteur des aimants permanents (11a, 11b) mesurée perpendiculairement à la surface d'appui (1) étant de préférence sensiblement égale à la distance entre la première position de translation et la seconde.

6. Dispositif de traitement de documents selon l'une des revendications précédentes, caractérisé en ce que la tête (8) peut se déplacer dans un sens et dans l'autre dans le sens longitudinal de la fente (5) entre la position de travail et la position de repos, que l'élément support (9) est guidé de façon à pouvoir se déplacer dans le sens longitudinal de la fente (5) et que le déplacement de la tête (8) et le déplacement de l'élément support (9) s'effectuent simultanément et dans le même sens.

7. Dispositif de traitement de documents selon la revendication 6, caractérisé en ce qu'un entraîneur (34) d'un chariot (26) portant la tête (8) et mû par un moteur le long de guidages (25) pénètre dans un évidement (35) de l'élément support (9), la tête (8) étant maintenue mobile sur le chariot (26) perpendiculairement à la surface d'appui (1), notamment au moyen d'une suspension élastique à ressort (24) et étant guidée par contrainte au moyen d'une voie de commande (30) entre la position de travail pénétrant dans la fente (5) et la position de repos située au voisinage du côté postérieur de la plaque (3), latéralement à l'extérieur de la zone de la fente (5).

8. Dispositif de traitement de documents selon l'une des revendications précédentes, caractérisé en ce que l'élément support (9), réalisé de préférence sous forme d'une pièce monobloc en matière plastique, est réalisé sous forme de caisson allongé s'étendant parallèlement à la fente (5), qui est guidé de façon à pouvoir se déplacer au moyen de moyens de guidage (12) prévus sur ses deux côtés extérieurs et de moyens de guidage (14) sur le côté postérieur de la plaque (P) et qui est de préférence pourvu de nervures de raidissement.

9. Dispositif de traitement de documents selon l'une des revendications précédentes, caractérisé en ce que l'élément de fermeture (10), réalisé de préférence en tant que pièce monobloc en matière plastique, forme un bandeau ayant une surface de passage pour le document bombée convexe, qui comporte de préférence sur son côté inférieur des nervures de raidissement (22a).

10. Dispositif de traitement de documents selon l'une des revendications précédentes, caractérisé en ce que la zone de déplacement de l'élément de fermeture (10) par rapport à l'élément support (9) est limitée, dans le sens perpendiculaire à la surface d'appui (1) au moyen d'au moins une butée (15a, 19) de l'élément de fermeture (10) qui agit lorsque la position de fermeture est atteinte et coopère avec une butée correspondante (9a, 20) de l'élément support (9), l'élément de fermeture (10) comportant de préférence une languette (15) en forme de crochet qui traverse une fente de réception (16) de l'élément support (9) s'étendant dans le sens du déplacement relatif de l'élément support (9) et de l'élément de fermeture (10), et dont le crochet (15a) passant derrière la fente (16) sert de butée agissant lorsqu'est atteinte la position de fermeture, l'élément de fermeture (10) comportant de préférence à une extrémité une patte de guidage (19) qui est maintenue mobile dans un logement de guidage (20) de l'élément support (9) délimitant la zone de déplacement précitée.

FIG. 1

FIG. 2

0 059 945

FIG. 3

FIG. 4

0 059 945

FIG.5

FIG.6

FIG.7